# EUROPEAN PATENT APPLICATION

(11) **EP 0 758 058 A1**
(43) Date of publication of application: **12.02.1997**
(21) Application number: 96305469.7
(22) Date of filing: 25.07.1996
(51) Int. Cl.: F16C 17/03

(54) **Air bearings**

(30) Priority: 08.08.1995 GB 9516231
(71) Applicant: WESTWIND AIR BEARINGS LIMITED, Poole, Dorset BH16 6LN (GB)
(72) Inventor: Tempest, Michael Clinton, Poole Dorset, PH17 7QQ (GB)
(74) Representative: Cooke, William Douglas

(57) **Abstract**

An air bearing is described comprising a shaft (1) encircled by the bearing having an outer shell (2) and three pads (3) made of aluminum truform which are pivoted (4a to 4c) on hardened steel balls (5a to 5c) in mounts (6, 7 and 8) respectively. The three pads (3) are linked to support the shaft (1) by means of O-rings (9), made of silicone rubber, seated in grooves (10) formed near the ends of the pads (3). The itlherent linkage of the pads by the two O-rings (9) dampens out any pad oscillation caused by rotation of the shaft (1). In a second embodiment the pivots (4a to 4c) are mounted in damper mountings with grooves at or near their ends in which are located further O-rings made of PTFE. Located between each damper mounting is a brushless direct current motor. These air bearings can rotate at high speeds of up to 200,000 rpm.

## Description

This invention relates to an air bearing more particularly for use in textile spindles.

Existing spindles used in the textile industry are normally driven by a motor-driven belt which engages the spindle by friction. This method of driving the spindles has the following disadvantages: (I)

The inherent speed limitation of a ball bearing; (ii) the fact that the belt drive tends to overload the bearing and cause failure; and (iii) the inherent speed limitation within the belt itself due to excessive centrifugal tension.

More recently there is a need to drive textile spindles at very high rotational speeds of up to 200,000 r.p.m.

An aim of the present invention is to provide a high speed air bearing for textile spindles which overcomes the above mentioned disadvantages and meets the requirement of high rotational speeds.

According to the present invention there is provided an air bearing comprising a shaft, rotatable in the bearing, including an outer shell, at least one set of pads supporting the shaft within the shell, the pads being supported in the shell by pivots, wherein the pads are secured at or near their outer ends by resilient O-rings to prevent oscillation of the pads on their pivots on rotation of the shaft.

Preferably, the pivots are located in the shell.

Conveniently, there are three pads in each set, each pad mounted on a pivot, one of the pivots being adjustable on screwthreads to locate the position of the adjustable pivot relative to the other two.

In a preferred construction the air bearing includes one complete damper mounting to carry a triple pad assembly.

The invention also extends to a textile spindle when mounted in an air bearing as set forth in any one of the four preceding paragraphs.

Two embodiments of the air bearing according to the invention, will now be described, by way of example only, with reference to the accompanying drawings, in which:
Fig. 1 is a cross-section of a first embodiment of the air bearing;
Fig. 2 is an axial cross-section taken along the line II-II of Fig. 1; and
Fig. 3 is an axial cross-section of a second embodiment of an air bearing.

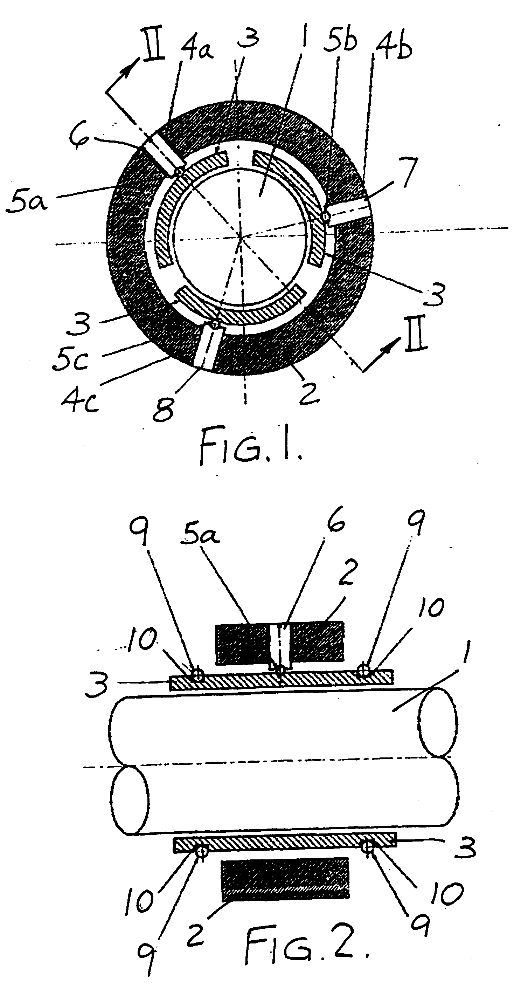

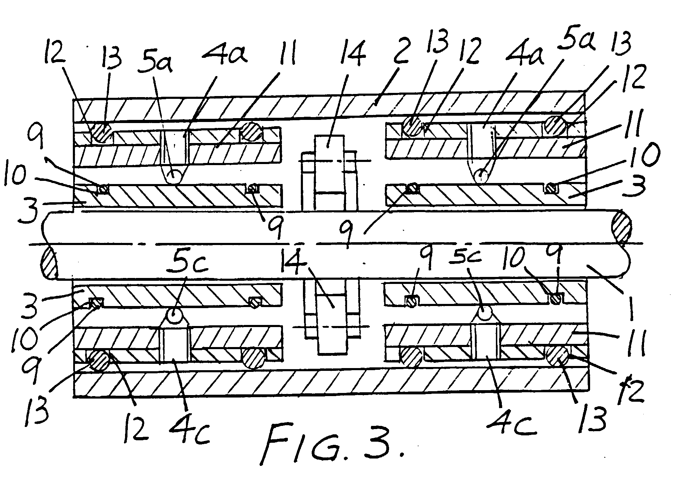

The air bearing shown in Figs. 1 and 2 comprises a shaft 1 encircled by the bearing having an outer shell 2 and three pads 3, made of aluminium truform, which are pivoted at 4a to 4c on hardened steel balls 5a to 5c in mounts 6, 7 and 8. The mount 6 is screwthreaded to provide radial adjustment relative to the other two mounts 7 and 8.

This aerodynamic bearing using triple pads has the quality of eliminating "half speed whirl" which is a significant problem in connection with conventional aerodynamic journal bearings, but it does suffer from one significant drawback in that instability of the pads causes angular oscillation of each pad about its pivot The improvement to overcome this oscillation is to link the three pads 3 supporting the shaft 1 by means of O-rings 9, made of silicone rubber or the material sold under the Trade Name NITRILE, seated in grooves 10 formed at or near the ends of the pads 3. The grooves 10 are marginally smaller than the cross-section of the O-rings 9 without imposing any radial inward forces while balancing the pads on their respective pivots. The inherent linkage of the pads by the two O-rings dampens out any pad oscillation caused by rotation of the shaft 1.

In the second embodiment of the air bearing illustrated in Fig. 3, like parts have the same reference numerals as in the first embodiment. The bearing comprises a shaft 1 encircled by a bearing shell 2 enclosing two sets of three bearing pads 3 pivoted on pivots 4a to 4c having hardened steel balls 5a to 5c engaging the outer surfaces of the pads 3. The pads 3 have grooves 10 at or near their ends in which are located O-rings 9 to resist angular oscillation of the pads 3, their nature being such that they permit the necessary tilting of the pads resulting in the generation of aerodynamic load. The pivots 4a to 4c are mounted in damper mountings 11 having grooves 12 at or near their ends in which are located O-rings 13 made of PTFE. Located between each damper mounting 11 is a brushless direct current motor 14.

In operation the O-rings 9 dampen out any oscillations in the pads 3 supporting the shaft 1.

In the second embodiment of the air bearing the movement of the pads 3 is dampened out by the mountings 11 on which the pads are pivoted. The damper mountings 11 are supported by the O-rings 13 effectively forming a link between the mountings 11 and the housing 2 preventing any radial inward forces while balancing the pads 3 on their respective pivots.

The above described air bearings are particularly suitable for use in textile spindles which can rotate at high speeds of up to 200,000 rpm.

Various modifications may be made to the air bearing of the invention. For example, the materials stated in the preferred embodiments may be varied within the scope of the appended claims.

## Claims

1. An air bearing comprising a shaft (1) rotatable in the bearing, including an outer shell (2), at least one set of pads (3) supporting the shaft (1) within the shell (2), the pads (3) being supported in the shell (2) by pivots (4a to 4c), characterised in that the pads (3) are secured at or near their outer ends by resilient O-rings (9) to prevent oscillation of the pads (3) on their pivots (4a to 4c) on rotation of the shaft.

2. An air bearing as claimed in Claim 1, characterised in that the pivots (4a to 4c) are located in the shell (2).

3. An air bearing as claimed in Claim 1 or 2, characterised in that there are three pads (3) in each set, each pad (3) being mounted on a pivot (4a to 4c), one of the pivots (4a) being adjustable by screwthreads to locate the position of the adjustable pivot (4a) relative to the other two (4b and 4c).

4. An air bearing as claimed in Claim 1, characterised in that the air bearing includes one complete damper mounting (11) to carry a triple pad assembly.

5. An air bearing as claimed in Claim 4, characterised in that a brushless direct current motor (14) is located between the inner ends of the damper mounting (11).

6. An air bearing as claimed in any preceding claim, characterised in that each pivot (4a to 4c) includes a hard steel ball (5a to 5c) at its respective pivot point.

7. An air bearing as claimed in any preceding claim, characterised in that the pads (3) are made of aluminium truform.

8. An air bearing as claimed in any preceding claim, characterised in that the O-rings (9) are made from silicon rubber or NITRILE (Trade Name).

9. A textile spindle when mounted in an air bearing as claimed in any preceding claim.
